Europäisches Patentamt

European Patent Office

Office européen des brevets

(19)

(11) Veröffentlichungsnummer : **0 067 359**
**B1**

(12)

# EUROPÄISCHE PATENTSCHRIFT

(45) Veröffentlichungstag der Patentschrift :
10.09.86

(21) Anmeldenummer : 82104787.5

(22) Anmeldetag : 01.06.82

(51) Int. Cl.⁴ : **C 08 F 10/06**, C 08 F 2/34,
**C 08 F 4/64**

(54) **Verfahren zum Herstellen von Homopolymerisaten oder Copolymerisaten des Propylens.**

(30) Priorität : 11.06.81 DE 3123115

(43) Veröffentlichungstag der Anmeldung :
22.12.82 Patentblatt 82/51

(45) Bekanntmachung des Hinweises auf die Patenterteilung : 10.09.86 Patentblatt 86/37

(84) Benannte Vertragsstaaten :
AT BE DE FR GB IT

(56) Entgegenhaltungen :
EP-A- 0 024 933
DE-A- 2 049 622

(73) Patentinhaber : BASF Aktiengesellschaft
Carl-Bosch-Strasse 38
D-6700 Ludwigshafen (DE)

(72) Erfinder : Rau, Wolfgang, Dr.
Turnerstrasse 161
D-6900 Heidelberg (DE)
Erfinder : Klamann, Helmut, Dr.
Leuschnerstrasse 44
D-6700 Ludwigshafen (DE)
Erfinder : Hennenberger, Peter, Dr.
Am Mandelgarten 19
D-6713 Freinsheim (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt im Rahmen eines Verfahrens zum Herstellen von Propylen-Homopolymerisaten oder Propylen-Copolymerisaten, die mehr als 50, insbesondere mehr als 80 Gew. % Propylen sowie weniger als 50, insbesondere weniger als 20 Gew. % anderer, 2 bis 6, insbesondere 2 bis 4 Kohlenstoffatome aufweisender α-Monoolefine einpolymerisiert enthalten, durch Polymerisation des bzw. der zugrundeliegenden Monomeren — d. h. des entsprechenden « Monomer » — in Anwesenheit von Wasserstoff als Molekulargewichtsregler mittels eines Ziegler-Natta-Katalysators, der keiner Vorbehandlung durch Vorpolymerisation unterzogen worden ist, bei Temperaturen von 40 bis 150, insbesondere 50 bis 110 °C und Gesamtdrücken von 10 bis 50, insbesondere 15 bis 40 bar in der Gasphase in einem gerührten Schüttgutbett, d. h. einem Bett, das stets in einem nichtfluidisierten Zustand vorliegt, aus kleinteiligem Polymerisat unter Abfuhr der Polymerisationswärme durch Verdampfungskühlung, wobei man durch eine Zuleitung (1) das Monomer im Gemisch mit Wasserstoff kontinuierlich oder taktweise in einen Polymerisationskessel (2) einbringt und durch eine Austragleitung (3) das Polymerisat kontinuierlich oder taktweise aus dem Polymerisationskessel (2) austrägt, mit den Maßgaben, daß man

a) in dem Polymerisationskessel (2) den Druck und die Temperatur in einem Bereich hält, der dem gasförmigen Zustand des Monomer entspricht,

b) durch eine Abgangsleitung (4) gasförmiges, nicht durch Polymerisation verbrauchtes Monomer im Gemisch mit Wasserstoff aus dem Polymerisationskessel (2) austrägt, das Monomer in einem Kondensator-Kühler-Speicher-System (5) verflüssigt sowie speichert und über eine Leitung (6) flüssig in den Polymerisationskessel (2) wieder einbringt.

c) die Temperatur in dem gerührten Schüttgutbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer,

d) mittels einer oder mehrerer Zuleitungen (8) das durch Polymerisation verbrauchte — sowie gegebenenfalls das mit dem Polymerisat ausgetragene — Monomer durch Zufuhr von Frisch-Monomer ersetzt, sowie den zur Aufrechterhaltung der gewünschten Konzentration erforderlichen Wasserstoff ergänzt und

e) mittels einer Pumpe (9) flüssiges Monomer aus dem Kondensator-Kühler-Speicher-System (5) abzieht.

Verfahren dieser Art sind bekannt und lassen sich in der Praxis mit gutem Erfolg durchführen.

Im gegebenen Zusammenhang ist insbesondere auf das aus der DE-PS 20 49 622 (= GB-PS 1 354 000 sowie UP-PS 4 012 573) bekannte Verfahren hinzuweisen ; es kann im wesentlichen als Basis für das erfindungsgemäße Verfahren angesehen werden.

Diesem lag die Aufgabe zugrunde, das bekannte Verfahren so weiter auszugestalten, daß es mit noch besserem Erfolg durchgeführt werden kann. Wesentliche Zielsetzungen hierbei waren u.a. eine Erhöhung der Zeitspanne, über die das Verfahren ohne Störung betrieben werden kann, sowie insbesondere eine Steigerung der zeitlichen Konstanz der Eigenschaften der Verfahrensprodukte, namentlich ihrer Schmelzindices (= Molekulargewichte).

Es wurde gefunden, daß die gestellte Aufgabe gelöst werden kann, wenn das eingangs definierte Verfahren derart ausgestaltet wird, daß man in weiteren Maßgaben

f) mittels einer Zweigleitung (10) eine Teilmenge des durch die Pumpe (9) abgezogenen flüssigen Monomer über einen Ejektor (11), mit dem flüssigen Monomer als Strahlmedium, in den Polymerisationskessel (2) einbringt,

g) mittels einer Leitung (12) die im Kondensator-Kühler-Speicher-System (5) gasförmig verbleibende Phase über die Saugseite des Ejektors (11) dem Polymerisationskessel (2) zuführt, und

h) mittels eines Ventils (13) die Menge der durch die Leitung (12) abgezogenen im Kondensator-Kühler-Speicher-System (5) gasförmig verbliebenen Phase so regelt, daß in diesem System (5) die Menge der dort gasförmig verbleibenden Phase über die Zeit konstant bleibt.

Gegenstand der Erfindung ist somit ein Verfahren zum Herstellen von Propylen-Homopolymerisaten oder Propylen-Copolymerisaten, die mehr als 50, insbesondere mehr als 80 Gew. % Propylen sowie weniger als 50, insbesondere weniger als 20 Gew. % anderer, 2 bis 6, insbesondere 2 bis 4 Kohlenstoffatome aufweisender α-Monoolefine einpolymerisiert enthalten, durch Polymerisation des bzw. der zugrundeliegenden Monomeren — d. h. des entsprechenden « Monomer » — in Anwesenheit von Wasserstoff als Molekulargewichtsregler mittels eines Ziegler-Natta-Katalysators, der keiner Vorbehandlung durch Vorpolymerisation unterzogen worden ist, bei Temperaturen von 40 bis 150, insbesondere 50 bis 110 °C und Gesamtdrücken von 10 bis 50, insbesondere 15 bis 40 bar in der Gasphase in einem gerührten Schüttgutbett, d. h. einem Bett, das stets in einem nicht-fluidisierten Zustand vorliegt, aus kleinteiligem Polymerisat unter Abfuhr der Polymerisationswärme durch Verdampfungskühlung, wobei man durch eine Zuleitung (1) das Monomer im Gemisch mit Wasserstoff kontinuierlich oder taktweise in einen Polymerisationskessel (2) einbringt und durch eine Austragleitung (3) das Polymerisat kontinuierlich oder taktweise aus dem Polymerisationskessel (2) austrägt, mit den Maßgaben, daß man

a) in dem Polymerisationskessel (2) den Druck und die Temperatur in einem Bereich hält, der dem gasförmigen Zustand des Monomer entspricht,

b) durch eine Abgangsleitung (4) gasförmiges, nicht durch Polymerisation verbrauchtes Monomer im Gemisch mit Wasserstoff aus dem Polymerisationskessel (2) austrägt, das Monomer in einem Kondensator-Kühler-Speicher-System (5) verflüssigt sowie speichert und über eine Leitung (6) flüssig in den Polymerisationskessel (2) wieder einbringt,

c) die Temperatur in dem gerührten Schüttgutbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer,

d) mittels einer oder mehrerer Zuleitungen (8) das durch Polymerisation verbrauchte — sowie gegebenenfalls das mit dem Polymerisat ausgetragene — Monomer durch Zufuhr von Frisch-Monomer ersetzt, sowie den zur Aufrechterhaltung der gewünschten Konzentration erforderlichen Wasserstoff ergänzt und

e) mittels einer Pumpe (9) flüssiges Monomer aus dem Kondensator-Kühler-Speicher-System (5) abzieht.

Das erfindungsgemäße Verfahren ist dadurch gekennzeichnet, daß man in weiteren Maßgaben

f) mittels einer Zweigleitung (10) eine Teilmenge des durch die Pumpe (9) abgezogenen flüssigen Monomer über einen Ejektor (11), mit dem flüssigen Monomer als Strahlmedium, in den Polymerisationskessel (2) einbringt,

g) mittels einer Leitung (12) die im Kondensator-Kühler-Speicher-System (5) gasförmig verbleibende Phase über die Saugseite des Ejektors (11) dem Polymerisationskessel (2) zuführt, und

h) mittels eines Ventils (13) die Menge der durch die Leitung (12) abgezogenen im Kondensator-Kühler-Speicher-System (5) gasförmig verbliebenen Phase so regelt, daß in diesem System (5) die Menge der dort gasförmig verbleibenden Phase über die Zeit konstant bleibt.

Zu dem erfindungsgemäßen Verfahren ist im einzelnen das Folgende zu sagen:

A. Stoffliche Seite

Das zu polymerisierende Monomer kann das einschlägig übliche sein, also z. B. Propylen allein oder ein Gemisch aus Propylen mit einem oder mehreren anderen $C_2$- bis $C_6$- -Monoolefinen, wie Äthylen, n-Buten-1, n-Hexen-1 oder 4-Methylpenten-1. Wie sich gezeigt hat, eignet sich das erfindungsgemäße Verfahren besonders gut zum Herstellen von Propylen-Homopolymerisaten, binären Copolymerisaten aus Propylen und Äthylen sowie ternären Copolymerisaten aus Propylen, Äthylen und n-Buten-1. Die Polymerisate fallen in kleinteiliger Form als feinerer oder gröberer Grieß an, wobei die Teilchengröße — nicht anders als bei den einschlägig bekannten Verfahren — von den im einzelnen gewählten Verfahrensbedingungen abhängt. Es läßt sich somit sagen, daß der Teilchendurchmesser der Polymerisate im allgemeinen im Bereich von etwa 0,03 bis 10 und insbesondere etwa 0,1 bis 5 mm liegt.

Die Polymerisation selbst erfolgt mittels eines Katalysators des Ziegler-Natta-Typs, der keiner Vorbehandlung durch Vorpolymerisation unterzogen worden ist. Letztere gibt es bekanntlich in einer überaus großen Vielfalt, wovon sich besonders gut bewährt haben die Zwei-Komponenten-Katalysatoren aus (I) einer Titantrichlorid-Komponente und (II) einer Aluminiumalkyl-Komponente der allgemeinen Formel $AlR_3$ bzw. $ClAlR_2$ — worin R für einen $C_1$- bis $C_8$-Alkylrest steht — im Atomverhältnis Titan aus der Katalysator-Komponente (I) : Aluminium aus der Katalysator-Komponente (II) von 1 : 1 bis 1 : 100.

Im Rahmen dieser Zwei-Komponenten-Katalysatoren hat man wiederum die Titantrichlorid-Komponente (I) in mannigfacher Weise ausgestaltet, wobei sich u. a. die folgenden — zur Verwendung im erfindungsgemäßen Verfahren besonders geeigneten — zwei Gruppen hervorheben:

Ia) Titantrichloride als solche und Titantrichlorid-Cokristallisate mit Metallhalogeniden, insbesondere Aluminiumchlorid etwa der Formel $TiCl_3 \cdot 1/3\ AlCl_3$. Siehe hierzu z. B. die US-PS 3 128 252 und 3 814 743.

Wie sich gezeigt hat, ist aus dieser Gruppe für den erfindungsgemäßen Zweck besonders gut geeignet ein sehr feinteiliges Cokristallisat der Formel $TiCl_3 \cdot 1/3\ AlCl_3$.

Ib) Mit Elektronendonatoren bzw. Lewis-Basen modifizierte Titantrichloride bzw. Titantrichlorid-Cokristallisate der unter (Ia) bezeichneten Art. Derartige modifizierte Titantrichlorid-Katalysatorkomponenten gibt es in zahlreichen Varianten, da sie bekanntlich eine Reihe von Vorteilen mit sich bringen. Um unnötige Wiederholungen zu vermeiden sei im gegebenen Zusammenhang schlaglichtartig beispielsweise verwiesen auf die GB-PS 851 113.

Für den erfindungsgemäßen Zweck ist diese Gruppe am besten geeignet, namentlich sehr feinteilige Cokristallisate der Formel $TiCl_3 \cdot 1/3$ $AlCl_3$, welche mit den folgenden Donatoren bzw. Basen modifiziert sind: Äthern, wie dem Diisoamyläther und dem Diisopentyläther; Estern, wie dem Benzoesäureisoamylester und dem Phenylessigsäureäthylester; Phosphinen, wie dem Tributylphosphin; Phosphinoxiden, wie dem Tributylphosphinoxid; sowie Säureamiden, wie dem Hexamethylphosphorsäuretriamid.

Die Art und Weise der Modifizierung im einzelnen können die einschlägig üblichen sein, wobei z. B. hervorzuheben sind die für den erfindungsgemäßen Zweck besonders geeigneten Modifizierungen gemäß den GB-PS 1 447 706, 1 485 181 und 1 512 730 sowie den US-PS 4 120 823, 4 154 699, 4 154 700 und 4 229 318.

Insgesamt läßt sich somit sagen, daß die stoffliche Seite des erfindungsgemäßen Verfahrens als solche im Rahmen des einschlägig üblichen liegt.

B. Verfahrenstechnische Seite

Sie hat ihren tiefsten Ursprung in den Techniken zum Herstellen von Homo- oder Copolymerisaten des Propylens in der Gasphase wie sie bekannt geworden sind z. B. aus den GB-PS 837 301, 1 006 469 und 1 032 945. Die Prinzipien dieser Techniken sind unbeschadet ihres Alters sinngemäß voll beim erfindungsgemäßen Verfahren anwendbar ; — womit sich insoweit nähere Ausführungen erübrigen.

In seinem spezielleren Aspekt basiert das erfindungsgemäße Verfahren — wie eingangs bereits dargelegt — im wesentlichen auf dem aus der DE-PS 20 49 622 (= GB-PS 1 354 020 sowie US-PS 4 012 573) bekannten Verfahren ; es bedarf daher auch insoweit keiner besonderer Erläuterungen.

Indes ist zu den kennzeichnenden Merkmalen des erfindungsgemäßen Verfahrens das Folgende zu sagen :

Sie bestehen darin, daß das eingangs definierte bekannte Verfahren derart ausgestaltet wird, daß man in weiteren Maßgaben

f) mittels einer Zweigleitung (10) eine Teilmenge des durch die Pumpe (9) abgezogenen flüssigen Monomer über einen Ejektor (11), mit dem flüssigen Monomer als Strahlmedium, in den Polymerisationskessel (2) einbringt,

g) mittels einer Leitung (12) die im Kondensator-Kühler-Speicher-System (5) gasförmig verbleibende Phase über die Saugseite des Ejektors (11) dem Polymerisationskessel (2) zuführt, und

h) mittels eines Ventils (13) die Menge der durch die Leitung (12) abgezogenen im Kondensator-Kühler-Speicher-System (5) gasförmig verbliebenen Phase so regelt, daß in diesem System (5) die Menge der dort gasförmig verbleibenden Phase über die Zeit konstant bleibt.

Diese Maßgaben sind vom Fachmann ohne weiteres zu vollziehen, zumal die dafür nötigen Vorrichtungen zum gängigen technischen Standard zählen. Letzteres gilt auch für den Ejektor (11), der eine übliche Strahlpumpe sein kann und die Aufgabe hat, mittels dem durch die Zweigleitung (10) strömenden flüssigen Monomer als Strahlmedium die im Kondensator-Kühler-Speicher-System (5) gasförmig verbleibende Phase anzusaugen und im Gemisch mit dem flüssigen Monomer in den Polymerisationskessel (2) zu fördern. Dabei ist darauf zu achten, daß die durch Zweigleitung (10) strömende Teilmenge an flüssigem Monomer so gewählt wird, daß die verbleibende, durch das Regelventil (7) strömende Teilmenge an flüssigem Monomer hinreichend groß ist, um die Maßgabe (c) sicher und allein erfüllen zu können. Hiervon abgesehen sind die Relationen der beiden Teilmengen zueinander nicht kritisch. Wie sich indes gezeigt hat, ist es von Vorteil, die durch Zweigleitung (10) strömende Teilmenge über die Zeit konstant zu halten ; das Verfahren läuft dann besonders « ruhig », und es ist auch besonders einfach, Maßgabe (h) zu vollziehen, etwa durch automatische Betätigung des Ventils (13) mittels eines Meßwertgebers für die Menge der im Kondensator-Kühler-Speicher-System (5) gasförmig vorliegenden Phase.

Beispiel

Es wird gearbeitet mit einem einschlägig üblichen, mit einem Rührer versehenen Polymerisationskessel, der ein Nutzvolumen von 12,5 m³ hat.

In dem Reaktor wird ein Propylen-Homopolymerisat mit einem Schmelzindex (2,16 kg/230 °C) von etwa 1,8 hergestellt durch Polymerisation von Propylen in Anwesenheit von Wasserstoff mittels eines Ziegler-Natta-Katalysators, der keiner Vorbehandlung durch Vorpolymerisation unterzogen worden ist, bei einer Temperatur von 75 °C und einem Propylen-Druck von 28 bar sowie einem Wasserstoff-Druck von 0,1 bar in der Gasphase in einem gerührten Schüttgutbett, d. h. einem Bett, das stets in einem nicht-fluidisierten Zustand vorliegt, aus kleinteiligem, einen Teilchendurchmesser von 0,2 bis 4 mm aufweisenden Polymerisat.

Der verwendete Ziegler-Natta-Katalysator besteht aus (I) einer Titrantrichlorid-Komponente, die gemäß Beispiel 2 der GB-PS 1 485 181 hergestellt worden ist sowie (II) einer Aluminiumalkyl-Komponente, namentlich Diäthylaluminiumchlorid. Diese Katalysatorkomponenten werden getrennt voneinander in die Polymerisationszone eingebracht, und zwar 300 g/h der Komponente (I) sowie 800 g/h der Komponente (II) ; — was einem Molverhältnis Ti aus (I) : Al aus (II) etwa 1 : 5 entspricht.

Die weiteren Rahmenbedingungen sind gemäß der DE-PS 20 49 622 (= GE-PS 1 354 020 sowie US-PS 4 012 573) so gewählt, daß die Abfuhr der Polymerisationswärme durch Verdampfungskühlung erfolgt, wobei man durch eine Zuleitung (1) das Monomer im Gemisch mit Wasserstoff (insgesamt 7 800 kg/h) kontinuierlich in den Polymerisationskessel (2) einbringt und durch eine Austragleitung (3) das Polymerisat (etwa 1 100 kg/h) taktweise aus dem Polymerisationskessel (2) austrägt, mit den Maßgaben, daß man

a) in dem Polymerisationskessel (2) den Druck und die Temperatur in einem Bereich hält, der dem gasförmigen Zustand des Monomer entspricht (was durch die o. g. Bedingungen erfüllt ist),

b) durch eine Abgangsleitung (4) gasförmiges, nicht durch Polymerisation verbrauchtes Monomer im Gemisch mit Wasserstoff (insgesamt etwa 6 400 kg/h) aus dem Polymerisationskessel (2) austrägt, das Monomer in einem Kondensator-Kühler-Speicher-System (5) verflüssigt sowie speichert und über eine Leitung (6) flüssig in den Polymerisationskessel (2) wieder einbringt,

c) die Temperatur in dem gerührten Schüttgutbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer,

d) mittels einer Zuleitung (8) das durch Polymerisation verbrauchte sowie das mit dem Polymerisat ausgetragene Monomer durch Zufuhr von Frisch-Monomer ersetzt (etwa 1 400 kg/h), sowie den zur Aufrechterhaltung der gewünschten Konzentration erforderlichen Wasserstoff ergänzt (etwa 0,12 kg/h) und

e) mittels einer Pumpe (9) flüssiges Monomer aus dem Kondensator-Kühler-Speicher-System (5) abzieht (etwa 6 400 kg/h).

Erfindungsgemäß ist das Verfahren im besonderen so ausgestaltet, daß man in weiteren Maßgaben

f) mittels einer Zweigleitung (10) eine Teilmenge (über die Zeit konstant etwa 3 250 kg/h) des durch die Pumpe (9) abgezogenen flüssigen Monomer über einen Ejektor (11), mit dem flüssigen Monomer als Strahlmedium, in den Polymerisationskessel (2) einbringt,

g) mittels einer Leitung (12) die im Kondensator-Kühler-Speicher-System (5) gasförmig verbleibende Phase über die Saugseite des Ejektors (11) dem Polymerisationskessel (2) zuführt, und

h) mittels eines Ventils (13) die Menge (etwa 8 m³/h) der durch die Leitung (12) abgezogenen im Kondensator-Kühler-Speicher-System (5) gasförmig verbliebenen Phase so regelt, daß in diesem System (5) die Menge der dort gasförmig verbleibenden Phase über die Zeit konstant bleibt.

Auf diese Weise läßt sich das Polymerisationsverfahren über eine längere Zeitspanne ohne Störung betreiben ; zudem wird eine hohe zeitliche Konstanz der Eigenschaften des erhaltenen Polymerisats, namentlich auch des Schmelzindex' erreicht.

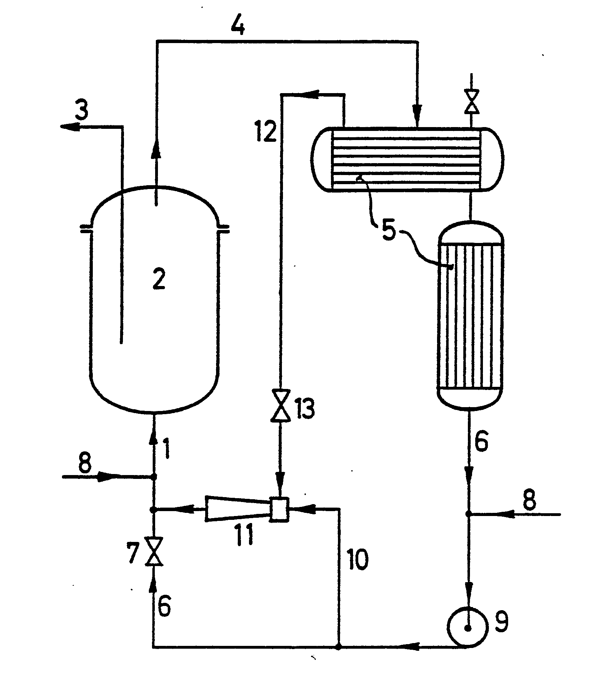

**Patentanspruch**

Verfahren zum Herstellen von Propylen-Homopolymerisaten oder Propylen-Copolymerisaten, die mehr als 50 Gew. % Propylen sowie weniger als 50 Gew. % anderer, 2 bis 6 Kohlenstoffatome aufweisender α-Monoolefine einpolymerisiert enthalten, durch Polymerisation des bzw. der zugrundeliegenden Monomeren — d. h. des entsprechenden « Monomer » — in Anwesenheit von Wasserstoff als Molekulargewichtsregler mittels eines Ziegler-Natta-Katalysators, der keiner Vorbehandlung durch Vorpolymerisation unterzogen worden ist, bei Temperaturen von 40 bis 150 °C und Gesamtdrücken von 10 bis 50 bar in der Gasphase in einem gerührten Schüttgutbett, d. h. einem Bett, das stets in einem nicht-fluidisierten Zustand vorliegt, aus kleinteiligem Polymerisat unter Abfuhr der Polymerisationswärme durch Verdampfungskühlung, wobei man durch eine Zuleitung (1) das Monomer im Gemisch mit Wasserstoff kontinuierlich oder taktweise in einen Polymerisationskessel (2) einbringt und durch eine Austragleitung (3) das Polymerisat kontinuierlich oder taktweise aus dem Polymerisationskessel (2) austrägt, mit den Maßgaben, daß man

a) in dem Polymerisationskessel (2) den Druck und die Temperatur in einem Bereich hält, der dem gasförmigen Zustand des Monomer entspricht,

b) durch eine Abgangsleitung (4) gasförmiges, nicht durch Polymerisation verbrauchtes Monomer im Gemisch mit Wasserstoff aus dem Polymerisationskessel (2) austrägt, das Monomer in einem Kondensator-Kühler-Speicher-System (5) verflüssigt sowie speichert und über eine Leitung (6) flüssig in den Polymerisationskessel (2) wieder einbringt,

c) die Temperatur in dem gerührten Schüttgutbett regelt durch fortlaufende Messung der Temperatur und eine bei Temperaturänderung mittels eines Regelventils (7) ausgelöste Änderung der pro Zeiteinheit eingebrachten Menge an flüssigem, in dem Polymerisationskessel (2) verdampfenden Monomer,

d) mittels einer oder mehrerer Zuleitungen (8) das durch Polymerisation verbrauchte — sowie gegebenenfalls das mit dem Polymerisat ausgetragene — Monomer durch Zufuhr von Frisch-Monomer ersetzt, sowie den zur Aufrechterhaltung der gewünschten Konzentration erforderlichen Wasserstoff ergänzt und

e) mittels einer Pumpe (9) flüssiges Monomer aus dem Kondensator-Kühler-Speicher-System (5) abzieht,

dadurch gekennzeichnet, daß man in weiteren Maßgaben

f) mittels einer Zweigleitung (10) eine Teilmenge des durch die Pumpe (9) abgezogenen flüssigen Monomer über einen Ejektor (11), mit dem flüssigen Monomer als Strahlmedium, in den Polymerisationskessel (2) einbringt,

g) mittels einer Leitung (12) die im Kondensator-Kühler-Speicher-System (5) gasförmig verbleibende Phase über die Saugseite des Ejektors (11) dem Polymerisationskessel (2) zuführt, und

h) mittels eines Ventils (13) die Menge der durch die Leitung (12) abgezogenen im Kondensator-Kühler-Speicher-System (5) gasförmig verbliebenen Phase so regelt, daß in diesem System (5) die Menge der dort gasförmig verbleibenden Phase über die Zeit konstant bleibt.

**Claim**

A process for the production of a propylene homopolymer or copolymer which contains more than 50 % by weight of propylene units and less than 50 % by weight of units of other α-monoolefins of 2 to 6 carbon atoms, by polymerizing the monomer, or monomers on which the copolymer is based (hereinafter referred to as « monomer »), in the presence of hydrogen as molecular weight regulator, using a Ziegler-Natta catalyst which has not been subjected to a pretreatment by prior polymerization, at from 40 to 150 °C, under a total pressure of from 10 to 50 bar, in the gas phase in a stirred loose bed — i. e. a bed which is always in a non-fluidized state — of finely divided polymer, with removal of the heat of polymerization by evaporative cooling, the monomer mixed with hydrogen being introduced continuously or batchwise into a polymerization kettle (2) via a line (1), and the polymer being discharged continuously or batchwise from the polymerization kettle (2) via a discharge line (3), with the provisos that

a) the pressure and temperature in the polymerization kettle (2) are maintained within a range corresponding to the gaseous state of the monomer,

b) gaseous unpolymerized monomer mixed with hydrogen is discharged from the polymerization kettle (2) via a discharge line (4), the monomer is liquefied and stored in a condenser-cooler-accumulator system (5) and is reintroduced, as liquid, into the polymerization kettle (2) via a line (6),

c) the temperature in the stirred loose bed is regulated by continuously measuring it and, if there is a temperature change, varying, by means of a regulating valve (7), the amount of liquid monomer which is introduced per unit time, and vaporizes in the polymerization kettle (2),

d) the monomer consumed by polymerization, plus any monomer discharged with the polymer, is replaced by supplying fresh monomer through one or more lines (8), and the hydrogen required to maintain the desired concentration is replenished, and

e) liquid monomer is withdrawn from the condenser cooler-accumulator system (5) by means of a pump (9),
wherein, according to further provisos,

f) a portion of the liquid monomer withdrawn by means of the pump (9) is introduced into the polymerization kettle (2) by means of a branch line (10) via an ejector (11), with the liquid monomer as the jetted medium,

g) the gaseous phase remaining in the condenser-cooler-accumulator system (5) is fed to the polymerization kettle (2) by means of a line (12), via the intake side of the ejector (11), and

h) the amount of the gaseous phase which remains in the condenser-cooler-accumulator system (5) and is removed via the line (12) is so regulated, by means of a valve (13), that the amount of gaseous phase left in the system (5) remains constant.

## Revendication

Procédé pour la préparation d'homopolymères de propylène ou de copolymères de propylène qui contiennent en liaison polymère plus de 50 % en poids de propylène et moins de 50 % en poids d'autres α-mono-oléfines comportant 2 à 6 atomes de carbone, par polymérisation du ou des monomères de base — c'est-à-dire du « monomère » correspondant — en présence d'hydrogène servant de régulateur de poids moléculaire, au moyen d'un catalyseur de Ziegler-Natta qui n'a pas été soumis à un pré-traitement par pré-polymérisation, à des températures de 40 à 150 °C et sous des pressions totales de 10 à 50 bar, en phase gazeuse dans un lit agité de matière en vrac, c'est-à-dire un lit qui se présente constamment à l'état non fluidisé, formé de polymère finement divisé, avec évacuation de la chaleur de polymérisation par refroidissement par évaporation, le monomère en mélange avec de l'hydrogène étant introduit en continu ou par intermittence, par une conduite d'entrée (1), dans une cuve de polymérisation (2) et le polymère étant extrait en continu ou par intermittence, par une conduite de déchargement (3), de la cuve de polymérisation (2), avec ces conditions que

a) l'on maintient, dans la cuve de polymérisation (2), la pression et la température dans une gamme qui correspond à l'état gazeux du monomère,

b) l'on extrait de la cuve de polymérisation (2), par une conduite de départ (4), le monomère gazeux non consommé par polymérisation en mélange avec de l'hydrogène, on liquéfie et on stocke le monomère dans un système condenseur-refroidisseur-réservoir (5) et on le réintroduit à l'état liquide dans la cuve de polymérisation (2) par une conduite (6),

c) l'on règle la température dans le lit agité de matière en vrac par mesure continue de la température et modification, déclenchée au moyen d'une soupape de réglage (7) en cas de changement de température, de la quantité introduite par unité de temps de monomère liquide s'évaporant dans la cuve de polymérisation (2),

d) au moyen d'une ou de plusieurs conduites d'alimentation (8), le monomère consommé par polymérisation — et, le cas échéant, celui qui est extrait avec le polymère — est remplacé par apport de monomère frais, complété de l'hydrogène nécessaire pour le maintien de la concentration voulue et

e) le monomère liquide est extrait du système condenseur-refroidisseur-réservoir (5) au moyen d'une pompe (9),
caractérisé par les dispositions supplémentaires consistant en ce que :

f) au moyen d'une conduite de branchement (10), une quantité partielle du monomère liquide extrait par la pompe (9) est envoyée dans la cuve de polymérisation (2) à travers un éjecteur (11), ce monomère liquide servant de fluide moteur,

g) au moyen d'une conduite (12), la phase qui reste sous forme gazeuse dans le système condenseur-refroidisseur-réservoir (5) est envoyée dans la cuve de polymérisation (2) par le côté aspiration de l'éjecteur (11) et

h) au moyen d'une soupape (13), la quantité de la phase qui reste sous forme gazeuse dans le système condenseur-refroidisseur-réservoir (5) et qui est aspirée à travers la conduite (12) est réglée de telle manière que la quantité de la phase qui reste sous forme gazeuse dans ce système (5) y soit maintenue constante dans le temps.